# DEMANDE DE BREVET EUROPEEN

(11) **EP 3 955 353 A1**
(43) Date de publication de la demande: **16.02.2022**
(21) Numéro de dépôt: 21189083.5
(22) Date de dépôt: 02.08.2021
(51) Int. Cl.: H01M 8/249, H01M 8/0215, H01M 8/0228, C25B 9/70, H01M 8/2404, H01M 8/2432, H01M 8/0282, H01M 8/124

(54) **RÉACTEUR D'ÉLECTROLYSE OU DE CO-ÉLECTROLYSE (SOEC) OU PILE À COMBUSTIBLE (SOFC) À EMPILEMENT DE CELLULES ÉLECTROCHIMIQUES PAR MODULES PRÉASSEMBLÉS, PROCÉDÉ DE RÉALISATION ASSOCIÉ**

(30) Priorité: 11.08.2020 FR 2008424
(71) Demandeur: Commissariat à l'Energie Atomique et aux Energies Alternatives, 75015 Paris (FR)
(72) Inventeur: DI IORIO, Stéphane, 38054 GRENOBLE (FR); MONNET, Thibault, 38054 GRENOBLE (FR); ORESIC, Bruno, 38054 GRENOBLE (FR); SZYNAL, Philippe, 38054 GRENOBLE (FR)
(74) Mandataire: Nony

(57) **Abrégé**

Réacteur d'électrolyse ou de co-électrolyse (SOEC) ou pile à combustible (SOFC) à empilement de cellules électrochimiques par modules préassemblés, Procédé de réalisation associé.

L'invention consiste essentiellement en un dispositif électrochimique qui est formé par assemblage par empilement de modules préalablement assemblés, chacun de ces modules étant réalisé comme un empilement usuel de cellules électrochimiques.
La fabrication de modules préassemblés permet de réaliser des dispositifs électrochimiques à un grand nombre de cellules électrochimiques, sans les problèmes d'arc-boutement présents et des courses d'écrasement trop importantes que l'on rencontre dans les empilements de cellules selon l'état de l'art, i.e. en un seul bloc.

## Description

### Domaine technique

La présente invention concerne le domaine de des piles à combustibles à oxydes solides (SOFC, acronyme anglais pour « Solid Oxide Fuel Cell »), celui de l'électrolyse de l'eau à haute température (EHT, ou EVHT pour électrolyse de la vapeur d'eau à haute température, ou HTE acronyme anglais pour High Temperature Electrolysis, ou encore HTSE acronyme anglais pour High Temperature Steam Electrolysis) également à oxydes solides (SOEC, acronyme anglais pour « Solid Oxide Electrolyser Cell »), et celui de la co-électrolyse à haute température de l'eau et d'un autre gaz choisi parmi le dioxyde de carbone CO₂. le dioxyde d'azote NO₂.

L'invention a trait plus particulièrement à la réalisation d'un dispositif électrochimique constituant un réacteur d'électrolyse ou de co-électrolyse de l'eau à haute température (EHT) de type SOEC, ou d'une pile à combustible de type SOFC, à empilement de cellules électrochimiques élémentaires.

La présente invention vise en premier lieu à améliorer l'assemblage d'un tel dispositif et également son fonctionnement.

Bien que décrite en référence principalement à l'application d'électrolyse de l'eau à haute température, l'invention s'applique tout aussi bien à une co-électrolyse d'eau et d'un autre gaz choisi parmi le dioxyde de carbone CO₂, qu'à une pile à combustible SOFC.

L'invention s'applique à une pile à combustible SOFC utilisant comme combustible soit de l'hydrogène, soit un hydrocarbure, par exemple le méthane CH4.

### Technique antérieure

Une pile à combustible SOFC ou un électrolyseur EHT est un dispositif électrochimique constitué d'un empilement de motifs élémentaires comportant chacun une cellule électrochimique à oxydes solides, constituée de trois couches superposées l'une sur l'autre anode/électrolyte/cathode, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène produits dans un électrolyseur EHT ; air et hydrogène injectés et eau produite dans une pile SOFC) et de séparer les compartiments anodiques et cathodiques qui sont les compartiments de circulation des gaz du côté respectivement des anodes et des cathodes des cellules.

Pour réaliser l'électrolyse de la vapeur d'eau à haute température EHT, typiquement entre 600 et 950°C, on injecte de la vapeur d'eau H2O dans le compartiment cathodique. Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H2 et des ions oxygène. Le dihydrogène est collecté et évacué en sortie de compartiment à hydrogène. Les ions oxygène O2- migrent à travers l'électrolyte et se recombinent en dioxygène à l'interface entre l'électrolyte et l'électrode à oxygène (anode).

Pour assurer le fonctionnement d'une pile à combustible SOFC, on injecte de l'air (oxygène) dans le compartiment cathodique et de l'hydrogène dans le compartiment anodique. L'hydrogène H2 va se transformer en ions H+ et libérer des électrons qui sont captés par l'anode. Les ions H+ arrivent sur la cathode où ils se combinent aux ions O2- constitués à partir de l'oxygène de l'air, pour former de l'eau. Le transfert des ions H+ et des électrons vers la cathode va produire un courant électrique continu à partir de l'hydrogène.

Pour augmenter les débits d'hydrogène et d'oxygène produits dans le cas de l'électrolyse EHT ou pour augmenter la puissance électrique fournie dans le cas de d'une pile à combustible SOFC, il est connu d'empiler plusieurs cellules électrochimiques élémentaires les unes sur les autres en les séparant par les interconnecteurs. L'ensemble est positionné entre deux plaques de connexion d'extrémité qui supportent les alimentations électriques et les alimentations/collecte en gaz d'un électrolyseur (réacteur d'électrolyse) ou d'une pile à combustible SOFC.

Par ailleurs, pour améliorer la qualité des contacts électriques établis entre les interconnecteurs et les électrodes, et donc les performances des dispositifs électrochimiques précités, des éléments de contact électrique sont intercalés individuellement et agencés sur les électrodes. Dans un dispositif électrochimique, une grille de nickel est classiquement utilisée pour le contact avec l'électrode à hydrogène (cathode en réacteur EHT, anode en pile SOFC), car elle donne des résultats satisfaisants à faible coût.

En général, à ce jour, les empilements ont un nombre limité de cellules électrochimiques. Typiquement, la demanderesse met en œuvre des empilements d'un nombre de 25 cellules électrochimiques.

Avant le fonctionnement d'un dispositif électrochimique précité, il est nécessaire de faire subir à son empilement au moins une étape de traitement thermique dite de réduction, afin de mettre les cellules électrochimiques sous leur forme réduite, et non pas oxydées comme elles le sont initialement.

Cette étape de réduction peut être un cycle thermomécanique sous gaz un gaz réducteur pour l'électrode à hydrogène et air ou gaz neutre pour l'électrode à oxygène.

Une étape de traitement thermique particulière a été décrite dans le brevet EP2870650 B1.

Les empilements mis en œuvre à ce jour, utilisent, en général à chacun de leurs étages, des joints qui doivent garantir l'étanchéité entre deux compartiments de circulation des gaz, adjacents distincts, i.e. un compartiment anodique et un compartiment cathodique. Des joints avantageux ont été décrits dans le brevet EP3078071B1. Ces joints ont la particularité de nécessiter un conditionnement thermique pendant lesquels ils s'écrasent.

Les éléments de contacts, tels que les couches décrites dans la demande de brevet EP2900846A1 ou les grilles de nickel, s'écrasent également lors du conditionnement thermique et lors du fonctionnement du dispositif électrochimique, ce qui garantit leur bonne mise en place. Les éléments qui servent d'éléments de contact dans la chambre hydrogène s'écrasent également.

Autrement dit, pendant l'étape de conditionnement thermique, un empilement d'un dispositif électrochimique précité s'écrase, typiquement de plusieurs centimètres. A ce jour, compte-tenu du relativement faible nombre de cellules empilées, l'écrasement se déroule correctement.

Or, la Demanderesse envisage des réalisations d'empilement à plus grand nombre de cellules électrochimiques, typiquement au-delà de 25 cellules.

Mais, les inventeurs ont analysé que le déplacement attendu lors du serrage de l'empilement va conduire à des problèmes mécaniques de blocage de type arc-boutement sur les tiges de guidage. Ces blocages vont empêcher un bon conditionnement thermique, et par voie de conséquence un fonctionnement normal du dispositif électrochimique.

Il existe donc un besoin pour améliorer encore les dispositifs électrochimiques à empilement formant un réacteur d'électrolyse de type SOEC ou d'une pile à combustible de type SOFC, notamment en augmentant le nombres de cellules électrochimiques dans l'empilement sans que cela ne nuise au fonctionnement électrochimique des dispositifs.

### Exposé de l'invention

Pour ce faire, l'invention a tout d'abord pour objet un dispositif électrochimique, constituant un réacteur d'électrolyse ou de co-électrolyse SOEC ou une pile à combustible SOFC, destiné à fonctionner à haute température, comprenant un empilement d'au moins deux modules préassemblés, dans lequel chaque module préassemblé comprend :
- un empilement de cellules électrochimiques à base d'oxydes solides de type SOEC/SOFC;
- une pluralité d'interconnecteurs électriques et fluidiques, constitués chacun d'un composant en matériau conducteur électronique et étanche aux gaz pour amener ou collecter le courant électrique aux cellules et pour amener, collecter et faire circuler des gaz sur chaque électrode de chaque cellule électrochimique; les interconnecteurs étant agencés individuellement de part et d'autre de chacune des cellules électrochimiques ;
- deux plaques de rigidification entre lesquelles l'empilement est agencé;
dans lequel
les plaques de rigidification, agencées au sein de l'empilement des modules, forment des interconnecteurs électriques et fluidiques entre modules, tandis que les deux plaques de rigidification, agencées aux extrémités de l'empilement des modules, forment des connecteurs électriques et fluidiques pour amener ou collecter le courant électrique du dispositif électrochimique vers l'extérieur et pour amener, collecter et faire circuler les gaz du dispositif électrochimique vers l'extérieur ;
dans lequel
au moins un élément de contact électrique est agencé entre deux modules adjacents avec contact entre leurs plaques de rigidification ;
et dans lequel
au moins un joint est agencé entre deux modules adjacents pour assurer l'étanchéité autour de chaque entrée/sortie de gaz d'un module à l'autre.

L'invention a également pour objet un dispositif électrochimique destiné à fonctionner à haute température, comprenant un empilement d'au moins deux modules préassemblés, dans lequel chaque module préassemblé comprend :
- un empilement de cellules électrochimiques à base d'oxydes solides de type SOEC/SOFC ;
- une pluralité d'interconnecteurs électriques et fluidiques, comprenant chacun un composant en matériau conducteur électronique et étanche aux gaz pour amener ou collecter le courant électrique aux cellules et pour amener, collecter et faire circuler des gaz sur chaque électrode de chaque cellule électrochimique ; les interconnecteurs étant agencés individuellement de part et d'autre de chacune des cellules électrochimiques ;
- deux plaques de rigidification entre lesquelles l'empilement est agencé ;
dans lequel
les plaques de rigidification, agencées au sein de l'empilement des modules, forment des interconnecteurs électriques et fluidiques entre modules, tandis que les deux plaques de rigidification, agencées aux extrémités de l'empilement des modules, forment des connecteurs électriques et fluidiques pour amener ou collecter le courant électrique entre le dispositif électrochimique et l'extérieur et pour amener, collecter et faire circuler les gaz entre le dispositif électrochimique et l'extérieur ;
dans lequel
au moins un élément de contact électrique est agencé entre deux modules adjacents avec contact entre leurs plaques de rigidification ;
et dans lequel
au moins un joint est agencé entre deux modules adjacents pour assurer l'étanchéité autour de chaque entrée/sortie de gaz d'un module à l'autre.

Selon une première variante de réalisation avantageuse, l'(les) élément(s) de contact électrique agencé(s) entre deux modules adjacents avec contact entre leurs plaques de rigidification comprend(nent) au moins une couche d'un matériau en céramique conductrice.

Selon cette première variante, le matériau en céramique conductrice est avantageusement choisi dans le groupe constitué par :
- La_{0,6}Sr_{0,4}Co_{0,8}Fe_{0,2}O₃ (LSCF) ;
- La_{0,8}Sr_{0,2}Cu_{0,9}Fe_{0,1}O_{2,5} (LSCuF) ;
- La_{0,7}Sr_{0,3}CoO₃ (LSC) ;
- Sm_{0,5}Sr_{0,5}CoO₃ (SSC) ;
- SmBa_{0,5}Sr_{0,5}Co₂O₅ (SBSC) ;
- GdSrCo₂O₅ (GSC) ;
- La_{0,65}Sr_{0,3}MnO₃ (LSM) ;
- LaBaCo₂O₅ (LBC) ;
- YBaCo₂O₅ (YBC) ;
- Nd_{i1,8}Ce_{0,2}CuO₄ (NCC) ;
- La_{0,8}Sr_{0,2}Co_{0,3}Mn_{0,1}Fe_{0,6}O₃ (LSCMF) ;
- La_{0,98}Ni_{0,6}Fe_{0,4}O₃ (LNF) ;
- La_{1,2}Sr_{0,8}NiO₄ (LSN) ;
- La_{0,7}Sr_{0,3}FeO₃ (LSF) ;
- La₂Ni_{0,6}Cu_{0,4}O₄ (LNC).

Avantageusement encore, le matériau en céramique conductrice est choisi dans le groupe constitué par le LSM, le LSC, le LNF, et le LSCF.

De préférence, la couche de matériau en céramique conductrice est évidée sur au moins une partie de son épaisseur. L'évidement peut consister en des rainures, des trous ou tout autre forme. Le fait d'évider, en particulier de rainurer la couche de contact permet pour une même force d'écrasement, d'augmenter la contrainte et donc d'écraser plus la couche et par là mieux corriger les défauts de surface. Autrement dit, en rainurant une couche de contact, on améliore sa capacité d'écrasement.

Selon une deuxième variante, l'(les) élément(s) de contact électrique agencé(s) entre deux modules adjacents avec contact entre leurs plaques de rigidification comprend(nent) au moins une grille en or ou au moins un cordon en or obtenu par dépôt d'une pâte. Une grille en or peut avoir une surface de 100 cm² ou 200cm² avec un nombre de mailles de 100 à 3600 mailles /cm². Un cordon réalisé par dépôt de pâte en or peut avoir une épaisseur de l'ordre de plusieurs centaines de microns. On peut également envisager une grille de nickel. On veillera dans ce cas à réaliser une étanchéité autour de la grille pour éviter son oxydation. Selon une variante de réalisation avantageuse, le au moins un joint agencé entre deux modules adjacents est constitué d'une feuille de mica percée en regard de chaque entrée/sortie de gaz d'un module à l'autre, le cas échéant revêtue d'un cordon en verre ou en vitrocéramique autour de chaque entrée/sortie de gaz. On peut également utiliser un mica simple sans verre ou vitrocéramique, ce qui diminue les performances d'étanchéité mais ce qui rend plus facile le remplacement du module en cas de besoin.

Alternativement, le au moins un joint agencé entre deux modules adjacents est constitué d'un cordon en verre ou en vitrocéramique autour de chaque entrée/sortie de gaz. La vitrocéramique a pour avantage d'être une structure cristalline qui augmente les performances d'étanchéité.

Avantageusement, l'épaisseur de de chacune des plaques de rigidification est comprise entre 1 et 10 mm.

Selon un mode de réalisation avantageux, le dispositif comprend deux plaques d'extrémité supplémentaires, dites plaques terminales, distinctes des plaques de rigidification entre lesquelles l'empilement de modules est agencé. Agencer des plaques terminales en plus des plaques de rigidification aux extrémités de l'empilement de modules, peut permettre une jonction fluidique plus simple avec le système de gestion des fluides environnant et notamment du fait des changements de dimensions entre les distributions fluidiques de l'empilement de modules et du système de gestion des fluides.

De préférence, l'épaisseur de chacune des plaques terminales est supérieure à 5 mm.

Selon un autre mode de réalisation avantageux, le dispositif comprend au moins une tige de connexion électrique fixée sur chacune des deux plaques de rigidification ou le cas échéant à chacune des deux plaques terminales, agencées aux extrémités de l'empilement des modules.

De préférence, chacune des tiges de connexion électrique est vissée dans un taraudage sur le chant d'une des deux plaques de rigidification ou le cas échéant d'une des deux plaques terminales.

De préférence encore, on peut prévoir quatre tiges de connexion fixées individuellement aux coins de chacune des deux plaques de rigidification ou le cas échéant à chacune des deux plaques terminales, agencées aux extrémités de l'empilement des modules. Cela permet d'améliorer l'homogénéité de la distribution surfacique du courant électrique et par là de d'avoir des plaques plus fines.

L'invention a également pour objet un procédé de réalisation d'un dispositif électrochimique, formant un réacteur d'électrolyse ou de co-électrolyse SOEC ou une pile à combustible SOFC, destiné à fonctionner à haute température, comprenant les étapes suivantes :
a/ réalisation d'au moins deux modules, chaque module comprenant:
   - un empilement de cellules électrochimiques à base d'oxydes solides de type SOEC/SOFC;
   - une pluralité d'interconnecteurs électriques et fluidiques, comprenant chacun un composant en matériau conducteur électronique et étanche aux gaz pour amener ou collecter le courant électrique aux cellules et pour amener, collecter et faire circuler des gaz sur chaque électrode de chaque cellule électrochimique; les interconnecteurs étant agencés de part et d'autre de chacune des cellules électrochimiques ;
   - deux plaques de rigidification entre lesquelles l'empilement est agencé;
b/ application d'un effort de serrage de chaque module par un système de boulons entre ses deux plaques de rigidification de sorte à obtenir un pré-assemblage de chaque module permettant de le transporter;
c/ empilement les uns sur les autres des modules préassemblés selon l'étape b/, avec intercalage, entre deux modules adjacents avec contact entre leurs plaques de rigidification, d'au moins un élément de contact électrique et d'au moins un joint pour assurer l'étanchéité autour de chaque entrée/sortie de gaz d'un module à l'autre;
d/ application d'un effort de serrage de l'empilement de modules par un système de serrage, indépendant des systèmes de boulons des modules, entre les deux plaques de rigidification d'extrémité de sorte à obtenir un assemblage;
e/ retrait des systèmes de boulons de l'assemblage tout en maintenant le serrage indépendant;
f/ application d'un traitement thermomécanique à l'assemblage de sorte à finaliser au moins la mise en place des éléments de contact électrique et des joints d'étanchéité entre plaques de rigidification et ainsi obtenir l'assemblage final ;
le procédé comprenant une étape de réduction de toutes les cellules électrochimiques.

Selon une variante de réalisation avantageuse, l'étape a/ comprend une étape a1/ d'application d'un traitement thermomécanique à chaque module réalisé, de sorte à finaliser au moins la mise en place d'éléments de contact électrique et de joints d'étanchéité au sein de chaque module.

Les modules doivent être réduits. L'étape de réduction des cellules électrochimiques peut être réalisée lors de l'étape a1/ pour chaque module ou lors de l'étape f/ pour l'assemblage de modules. La réduction peut donc être faite lors de la mise en place initiale en température de chacun des modules, ou ultérieurement une fois l'empilement des modules réalisé.

La réduction des cellules électrochimiques, peut se faire dès 650°C ou avantageusement à 800°C pendant une durée d'une heure à plusieurs jours en fonction des débits d'hydrogène envoyés.

Un certain volume d'hydrogène est nécessaire pour réduire complètement une cellule électrochimique, et il faut de préférence envoyer de petites quantités d'hydrogène à la fois pour éviter une réduction trop brutale pour ne pas risquer des déformations de cellules, voir leur casse. Une fois réduites, les cellules et donc le dispositif électrochimique peut fonctionner normalement, c'est-à-dire mettre en œuvre une réaction d'électrolyse EHT ou produire de l'électricité.

Selon une autre variante avantageuse, lorsque l'étape de réduction des cellules électrochimiques est réalisée lors de l'étape a1/ pour chaque module, on réalise avantageusement, à l'issue de cette dernière, une étape a2/ de mesure de tension électrique totale de chaque module.

Selon une autre variante avantageuse, le procédé comprend une étape a3/ de test d'étanchéité de chaque module.

Ainsi, l'invention consiste essentiellement en un dispositif électrochimique qui est formé par assemblage par empilement de modules préalablement assemblés, chacun de ces modules étant réalisé comme un empilement usuel de cellules électrochimiques.

La fabrication de modules préassemblés permet de réaliser des dispositifs électrochimiques à un grand nombre de cellules électrochimiques, sans les problèmes d'arc-boutement présents et des courses d'écrasement trop importantes que l'on rencontre dans les empilements de cellules selon l'état de l'art, i.e. en un seul bloc.

Typiquement, si le nombre maximal de cellules électrochimiques que l'on peut empiler avant que les problèmes d'arc-boutement apparaissent est de 25, l'invention permet de réaliser des modules préassemblés comprenant 25 cellules, et donc un empilement global de modules comprenant un multiple de 25 cellules sans risque de voir des problèmes d'arc-boutement.

Au final, l'assemblage de modules permet un fonctionnement normal du dispositif électrochimique.

Les éléments de contact et joints d'étanchéité entre plaques de rigidification de deux modules adjacentes permettent d'obtenir une bonne circulation des gaz et d'assurer une bonne étanchéité, et également assurer un bon contact électrique.

En outre, la fabrication sous forme de modules permet le remplacement aisé de l'un d'entre eux s'il est défectueux.

De plus, un empilement de modules préassemblé selon l'invention permet de proposer un dispositif électrochimique dont le niveau de tension, la puissance totale ou la taille peut être modulée facilement. Il est ainsi possible de fournir des tensions électriques comprises entre 10 et 1000 V à l'aide d'un seul dispositif électrochimique, et cela en modulant le nombre total de cellules par module et le nombre de modules empilés.

D'autres avantages et caractéristiques ressortiront mieux à la lecture de la description détaillée, faite à titre illustratif et non limitatif, en référence aux figures suivantes.

### Brève description des dessins

[Fig 1] la figure 1 est une vue schématique de côté d'un exemple de dispositif électrochimique à modules préassemblés selon l'invention.
[Fig 2] la figure 2 est une vue schématique de côté d'un exemple de module à empilement de cellules électrochimiques conforme à l'invention.
[Fig 3] la figure 3 est une vue schématique du dessus d'un exemple de plaque de rigidification avec ses perçages pour la circulation des gaz et ses moyens d'accrochage d'un système de serrage à boulon filetés pour le transport et la manipulation d'un module préassemblé conforme à l'invention.
[Fig 4] la figure 4 est une vue schématique du dessus de deux plaques de rigidification avec leurs moyens d'accrochage d'un système de serrage à boulon filetés, qui sont destinées à équiper deux modules distincts à préassembler et à empiler l'un sur l'autre.
[Fig 5] la figure 5 est une schématique en coupe longitudinale d'un exemple de module à empilement de cellules électrochimiques conforme à l'invention muni de son système de serrage à boulons.
[Fig 6] la figure 6 est une vue schématique partielle de côté d'une partie inférieure d'un dispositif électrochimique selon une première variante de réalisation.
[Fig 7] la figure 7 est une vue schématique partielle de côté d'une partie inférieure d'un dispositif électrochimique selon une première variante de réalisation.

### Description détaillée

Dans l'ensemble de la présente demande, les termes « inférieur », « supérieur », « dessus », « dessous », « intérieur », « extérieur », « « interne » « externe» sont à comprendre par référence à un dispositif électrochimique selon l'invention en configuration de fonctionnement, i.e. les modules étant empilés à la verticale.

On précise également que les électrolyseurs ou piles à combustible décrits sont de type à oxydes solides (SOEC, acronyme anglais de « *Solid Oxyde Electrolyte Cell* »ou SOFC, acronyme anglais de « *Solid Oxide Fuel Cell* ») fonctionnant à haute température. Ainsi, tous les constituants (anode/électrolyte/cathode) d'une cellule d'électrolyse ou de pile sont des céramiques. La haute température de fonctionnement d'un électrolyseur (réacteur d'électrolyse) ou d'une pile est typiquement comprise entre 600°C et 1000°C. Typiquement, les caractéristiques d'une cellule d'électrolyse SOEC convenant à l'invention, du type cathode support (CSC), peuvent être celles indiquées comme suit dans le tableau 1 ci-dessous.

**[Tableau 1]**

| **Cellule d'électrolyse** | **Unité** | **Valeur** |
|---|---|---|
| **Cathode** | | |
| Matériau constitutif | | Ni-YSZ |
| Epaisseur | µm | 400 |
| Conductivité thermique | W m⁻¹ K⁻¹ | 13,1 |
| Conductivité électrique | Ω⁻¹ m⁻¹ | 10⁵ |
| Porosité | | 0,37 |
| Perméabilité | m² | 10⁻¹³ |
| Tortuosité | | 4 |
| Densité de courant | A.m⁻² | 5300 |

| **Anode** | | |
|---|---|---|
| Matériau constitutif | | LSM , LSC |
| Epaisseur | µm | entre 10 et 50 |
| Conductivité thermique | W m⁻¹ K⁻¹ | 9,6 |
| Conductivité électrique | Ω⁻¹ m⁻¹ | 1 10⁴ |
| Porosité | | 0,37 |
| Perméabilité | m² | 10⁻¹³ |
| Tortuosité | | 4 |
| Densité de courant | A.m⁻² | 2000 |

| **Electrolyte** | | |
|---|---|---|
| Matériau constitutif | | YSZ |
| Epaisseur | µm | <10 |
| Résistivité | Ω m | 0,42 |

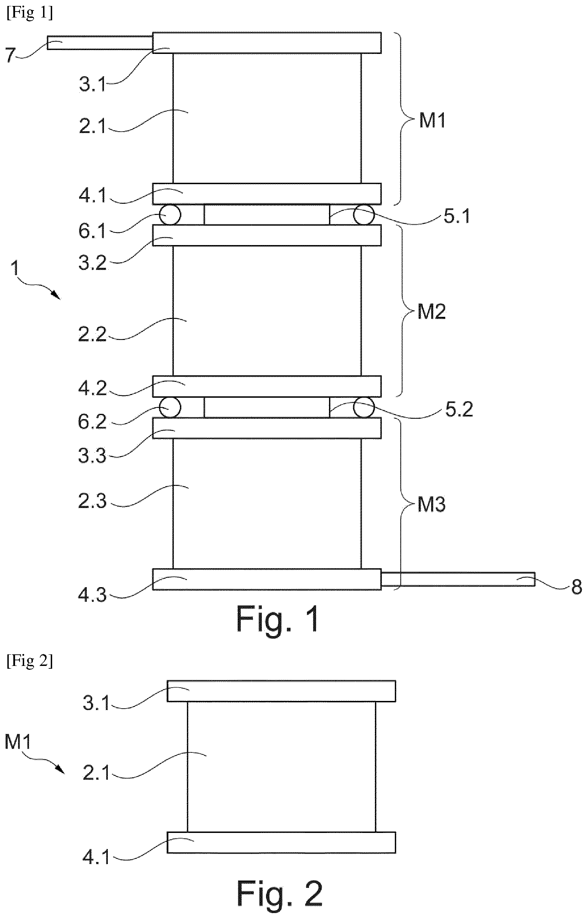

On a représenté en figure 1, un dispositif électrochimique 1 selon l'invention pouvant fonctionner de manière réversible en électrolyseur haute température ou pile à combustible SOFC.

Ce dispositif 1 comprend un empilement de trois modules préassemblés M1, M2, M3.

Chacun des modules M1, M2, M3 comprend un empilement respectivement 2.1, 2.2, 2.3 de cellules électrochimiques à base d'oxydes solides de type SOEC/SOFC.

Au sein de chaque empilement 2.1, 2.2, 2.3, une pluralité d'interconnecteurs électriques et fluidiques, non représentée, est agencée individuellement de part et d'autre de chacune des cellules électrochimiques. Chaque interconnecteur est constitué d'un composant en matériau conducteur électronique et étanche aux gaz pour amener ou collecter le courant électrique aux cellules et pour amener, collecter et faire circuler des gaz sur chaque électrode de chaque cellule électrochimique.

De même, au sein de chaque empilement 2.1, 2.2, 2.3, une pluralité d'éléments de contact et de joints d'étanchéité autour de chaque entrée/sortie de gaz est agencée individuellement sur chaque électrode de cellules électrochimiques.

Autrement dit, chaque module M1, M2, M3 comprend un empilement de cellules avec intercalage individuel d'interconnecteurs, d'éléments de contact et de joints d'étanchéité comme fait selon l'état de l'art pour un dispositif électrochimique complet.

Chaque module M1, M2, M3 comprend en outre deux plaques de rigidification respectivement 3.1, 4.1 ; 3.2, 4.2 et 3.3, 4.3 entre lesquelles l'empilement de cellules 2.1, 2.2, 2.3 est agencé.

Dans l'empilement de modules, les plaques de rigidification 4.1, 3.2, 4.2, 3.3 au sein de l'empilement des modules, forment des interconnecteurs électriques et fluidiques entre modules.

Les deux plaques de rigidification 3.1, 4.3, agencées aux extrémités de l'empilement des modules, forment des connecteurs électriques et fluidiques pour amener ou collecter le courant électrique du dispositif électrochimique vers l'extérieur et pour amener, collecter et faire circuler les gaz du dispositif électrochimique vers l'extérieur.

Un élément de contact électrique 5.1 est agencé entre les deux modules adjacents M1, M2 avec contact entre leurs plaques de rigidification 4.1 et 3.2.

Un joint 6.1 est agencé entre les deux modules adjacents M1, M2 pour assurer l'étanchéité autour de chaque entrée/sortie de gaz d'un module M1 à l'autre M2.

Un élément de contact électrique 5.2 est agencé entre les deux modules adjacents M2, M3 avec contact entre leurs plaques de rigidification 4.2 et 3.3.

Un joint 6.2 est agencé entre les deux modules adjacents M2, M3 pour assurer l'étanchéité autour de chaque entrée/sortie de gaz d'un module M2 à l'autre M3.

Deux tiges de connexion électrique 7, 8, usuellement appelées cannes de courant, sont vissées chacune dans un taraudage sur le chant d'une des deux plaques de rigidification 3.1, 4.3 qui sont aux extrémités de l'empilement de modules. Ainsi, le courant électrique peut être amené par une des cannes 7 et sortir de l'empilement de modules par l'autre canne 8. Les cannes de courant 7, 8 peuvent être avantageusement constituées chacune d'une tige en un premier matériau métallique et d'une gaine recouvrant entièrement et soudée à la tige et en un deuxième matériau métallique, inoxydable, de résistivité électrique inférieure à la résistivité électrique du premier matériau métallique. La tige et la gaine sont de préférence soudées l'une à l'autre par compression isostatique à chaud.

Par exemple, la tige est en cuivre et est recouverte d'une gaine en acier inoxydable.

Ainsi, le dispositif électrochimique 1 selon l'invention est une superposition de modules préassemblés M1 à M3 au travers desquels circulent les gaz de la réaction électrochimique et les courants électrique, chacun des modules M1 à M3 comprenant un empilement de cellules électrochimiques en alternance avec des interconnecteurs, éléments de contact et joints d'étanchéité comme selon l'état de l'art.

On décrit maintenant en référence aux figures 2 à 6 un procédé de réalisation d'un dispositif électrochimique 1 selon l'invention.

Etape a/ : on réalise chacun des modules M1 à M3 avec un empilement de cellules 2.1, 2.2, 2.3 entre deux plaques de rigidification 3.1, 3.2, 3.3 et 4.1, 4.2, 4.3. Un exemple de module M1 réalisé est montré en figure 2.

Chacune des plaques de rigidification 3.1, 3.2, 3.3 est de préférence constituée d'une plaque métallique épaisse, et sur une de ses faces sur laquelle doivent circuler les gaz, de deux tôles minces métalliques. Autrement dit, c'est l'épaisseur de la plaque métallique qui apporte la rigidification, les tôles minces permettant la circulation des gaz et la continuité électrique.

La plaque métallique épaisse est de préférence en acier ferritique, notamment de type Crofer^{®}, AISI 441 et/ou AISI 430. L'épaisseur de la plaque métallique épaisse est de préférence supérieure à 1mm. L'épaisseur de chaque tôle mince est comprise de préférence entre 0,1 et 0,5 mm, de préférence égale à 0,2mm. L'épaisseur totale d'une plaque de rigidification 3.1, 3.2, 3.3 est de préférence comprise entre 1 et 10 mm.

On vient appliquer un traitement thermomécanique à chaque module réalisé de sorte à finaliser au moins la mise en place d'éléments de contact électrique et de joints d'étanchéité au sein de chaque module. Ce traitement thermomécanique peut comprendre également la réduction des cellules électrochimiques.

Les températures sont déterminées par les températures nécessaires pour la mise en place des joints typiquement en verre ou vitrocéramique à savoir 920 °C pendant 1h. La montée en température peut se faire pour un module donné jusqu'à 10°C/min.

La réduction des cellules électrochimiques, peut se faire dès 650°C ou avantageusement à 800°C pendant une durée d'une heure à plusieurs jours en fonction des débits d'hydrogène envoyés.

Puis on mesure de tension électrique totale de chaque module ce qui permet de valider le bon fonctionnement électrique de chaque module.

On arrête la chauffe du traitement thermomécanique et la température va revenir à 20°C naturellement. Il est possible de refroidir plus rapidement en envoyant de l'air froid pour augmenter les vitesses de refroidissement.

Un test d'étanchéité de chaque module est alors réalisé.

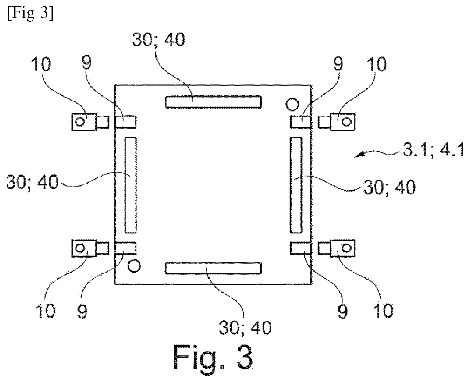

Etape b/ : Comme illustré en figure 3 en relation avec une plaque de rigidification 3.1 ou 4.1, chacune des plaques de rigidifications des modules M1 à M3 est percée sur son chant et à ses quatre coins d'un taraudage 9 dans lequel est vissée une patte de fixation 10. Également, chaque plaque de rigidification est percée de lumières débouchantes 30 ou 40 pour le passage des gaz.

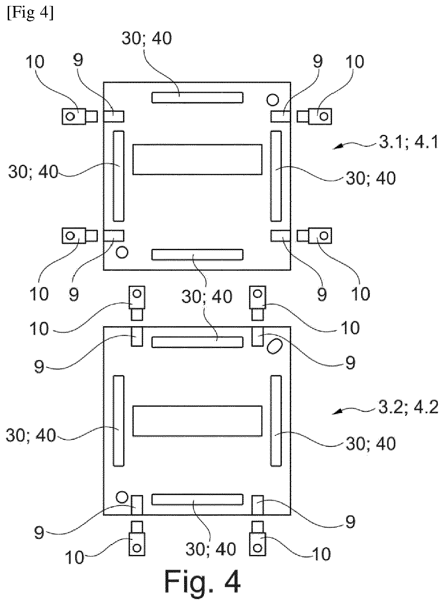

A température ambiante on vient mettre en place un système de boulons de serrage constitué chacun d'une tige filetée 11 et d'écrous 12 aux quatre coins de chaque module, comme illustré en figure 4 avec le module M1. Chacune des tiges 11 est insérée dans le trou d'une patte de fixation 10.

On précise que l'emplacement des taraudages 9 et des pattes de fixation 10 qui sont vissées est décalé d'un module M1 à un autre M2 qui sera empilé sur le module M1. En effet, comme explicité par la suite, le système de boulonnage de chaque module M1 à M3 devant être retiré par la suite, il ne faut avoir qu'il y ait d'interférence physique lors des retraits des tiges filetées 11.

Un exemple avantageux d'emplacement décalé est représenté en figure 4 en référence à deux plaques de rigidification 3.1 ou 4.1 et 3.2 ou 4.2 appartenant à deux modules M1, M2 distincts qui vont être empilés l'un sur l'autre par la suite. On voit que les taraudages 9 et pattes de fixation 10 sont décalés d'un bord latéral à un autre, c'est-à-dire de 90° d'une plaque de rigidification 3.1 ou 4.1 l'autre 3.2 ou 4.2 qui sera empilée.

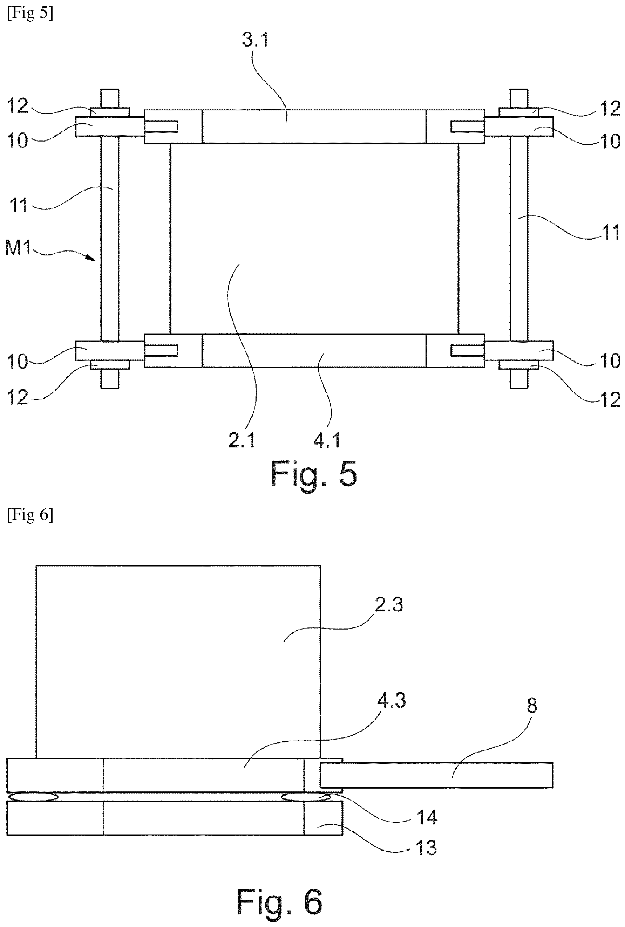

Pour chaque module M1 à M3, on applique alors un effort de serrage par le système de boulons 10, 11, 12 entre ses deux plaques de rigidification de sorte à obtenir un pré-assemblage de chaque module permettant de le transporter (figure 5).

Etape c/ : on réalise alors le transport puis l'empilement les uns sur les autres des modules M1 à M3 préassemblés selon l'étape b/, avec intercalage entre deux modules adjacents avec contact entre leurs plaques de rigidification 3.2 et 4.1 ou 4.2 et 3.3, de l'élément de contact électrique respectivement 5.1 ou 5.2 et du joint d'étanchéité respectivement 6.1 ou 6.2.

Plus précisément, pour le positionnement des modules, le placement des éléments de contact 5.1 ou 5.2 et pour réaliser un joint d'étanchéité 6.1 ou 6.2, on procède comme suit :
- on découpe une feuille de mica pour réaliser les entrées/ sortie de gaz et l'emplacement central d'un élément de contact et on vient repérer les zones à étancher de ces entrées ;
- on dépose des cordons de barbotine de verre au-dessus des zones repérées à étancher ;
- on positionne la feuille de mica revêtue des cordons de barbotine sur le module inférieur ;
- on positionne l'élément de contact à son emplacement central prévu ;
- on positionne le module supérieur.

Etape d/ : on applique alors un effort de serrage de l'empilement de modules M1 à M3 par un système de serrage, indépendant des systèmes de boulons des modules, entre les deux plaques de rigidification d'extrémité 3.1 et 4.3 de sorte à obtenir un assemblage.

Etape e/ : Une fois l'assemblage réalisé avec la mise sous charge de la totalité de l'empilement selon l'étape d/, on vient retirer les systèmes de boulons. Le décalage d'emplacement des taraudages 9 et pattes de fixation 10 d'un module M1 ou M2 à un autre adjacent dans l'empilement M2 ou M3 permet de dégager aisément les tiges filetées 11 des systèmes de boulonnage.

Etape f/ : on vient lors appliquer un traitement thermomécanique à l'assemblage de sorte à finaliser au moins la mise en place des éléments de contact électrique 5.1 et 5.2 et des joints d'étanchéité 6.1 et 6.2 entre plaques de rigidification. La formation des joints d'étanchéité peut être faite sous gaz neutre qui a pour fonction d'empêcher l'oxydation. Il peut s'agir d'azote, d'argon, d'hélium ou de néon.

L'assemblage final est ainsi obtenu.

Un des avantages d'un dispositif électrochimique 1 par empilement de modules M1 à M3 préassemblés tels qu'il vient d'être décrit est de pouvoir procéder à un remplacement aisé d'un module défaillant sans avoir besoin de remplacer le dispositif complet.

Pour ce faire, on peut procéder comme suit :
- arrêt du fonctionnement électrochimique avec déconnexion électrique et retour à température ambiante du dispositif 1 sous charge de serrage ;
- pour chaque module M1 à M3, remise en place de son système de serrage par boulons 10, 11,12 ;
- enlèvement du système de serrage global du dispositif, indépendant des systèmes par boulons ;
- retrait du module défectueux et remplacement de ce dernier par un module neuf ;
- remise sous charge par le système de serrage global du dispositif ;
- retrait de tous les systèmes de serrage par boulons 10, 11,12 ;
- application d'un traitement thermomécanique pour remettre en place les éléments de contact 5.1 ; 5.2 et les joints d'étanchéité 6.1; 6.2 ;

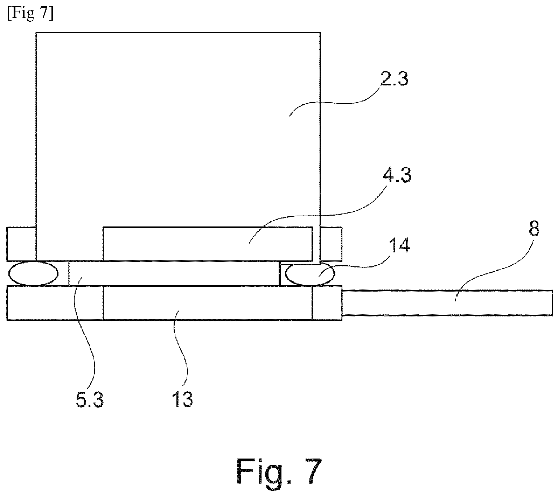

Comme illustré aux figures 6 et 7, il peut être avantageux de mettre en place des plaques terminales 13 aux extrémités de l'empilement de modules M1 à M3 en sus des plaques de rigidification d'extrémité 3.1 ; 4.3 des modules. Cela peut permettre une jonction fluidique plus simple avec le système de gestion des fluides environnant.

La canne de courant 8 est de préférence vissée dans la plaque terminale 13 qui pourra être plus épaisse qu'une plaque de rigidification 13 (figure 7). On prévoit dans cette configuration un élément de contact 5.3 supplémentaire entre la plaque terminale 13 et la plaque de rigidification 4.3.

Quelle que soit la configuration avec des plaques terminales (figure 6 ou 7), on prévoit aussi un joint d'étanchéité 14 supplémentaire entre la plaque terminale 13 et la plaque de rigidification 4.3.

L'invention n'est pas limitée aux exemples qui viennent d'être décrits; on peut notamment combiner entre elles des caractéristiques des exemples illustrés au sein de variantes non illustrées.

D'autres variantes et améliorations peuvent être envisagées sans pour autant sortir du cadre de l'invention.

Si dans les exemples illustrés, un dispositif électrochimique est un empilement d'un nombre de trois modules M1 à M3 à empilement de cellules, on peut envisager un empilement de deux modules ou plus de trois modules, seul le nombre de cellules électrochimiques empilées au sein de chaque modules étant limité pour ne pas générer de blocage par arc-boutement lors de leur serrage.

En lieu et place d'un système de serrage et de transport avec taraudage dans le chant des plaques de rigidification comme décrit en référence aux figures 3 et 4, une alternative serait de faire avec un système comme décrit dans le brevet FR3045215B1 : chaque plaque de rigidification devrait présenter une surface plus grande avec des trous traversant dans la partie périphérique pour faire passer les tiges des boulons.

De manière plus générale, on peut envisager d'autres systèmes mécaniques pour la reprise d'efforts, que les boulons et les pattes de fixation mis en œuvre dans l'exemple illustré.

Si dans l'exemple du procédé de réalisation, l'étape de réduction des cellules électrochimiques a lieu pour chaque module lors de leur fabrication à haute température, on peut aussi envisager de le faire lors de l'étape f/ pour l'assemblage de modules.

Les taraudages 9 pour la fixation des systèmes de serrage par boulons 10, 11, 12 peuvent avantageusement servir à fixer les cannes de courant 7, 8. Ainsi, en utilisant les mêmes emplacements taraudés, on gagne en compacité. La fixation des cannes de courant 7, 8 est avantageusement réalisée avec les mêmes pattes de fixation 10. De préférence, les taraudages 9 sont alors recouverts d'une pâte d'or pour assurer un bon contact électrique.

Pour la réalisation des joints 6.1, 6.1, on peut les réaliser uniquement avec du mica, c'est-à-dire sans couche de verre ou vitrocéramique comme dans l'exemple illustré. Cette variante peut faciliter le remplacement d'un module défectueux si besoin, car le verre ou la vitrocéramique réagit avec son support.

## Revendications

1. Dispositif électrochimique (1) destiné à fonctionner à haute température, comprenant un empilement d'au moins deux modules préassemblés (M1, M2, M3), dans lequel chaque module préassemblé comprend :
- un empilement (2.1, 2.2, 2.3) de cellules électrochimiques à base d'oxydes solides de type SOEC/SOFC;
- une pluralité d'interconnecteurs électriques et fluidiques, comprenant chacun un composant en matériau conducteur électronique et étanche aux gaz pour amener ou collecter le courant électrique aux cellules et pour amener, collecter et faire circuler des gaz sur chaque électrode de chaque cellule électrochimique ; les interconnecteurs étant agencés individuellement de part et d'autre de chacune des cellules électrochimiques ;
- deux plaques de rigidification (3.1, 4.1 ; 3.2, 4.2 ; 3.3, 4.3) entre lesquelles l'empilement est agencé;
dans lequel
les plaques de rigidification (4.1 ; 3.2, 4.2 ; 3.3), agencées au sein de l'empilement des modules, forment des interconnecteurs électriques et fluidiques entre modules, tandis que les deux plaques de rigidification (3.1 ; 4,3), agencées aux extrémités de l'empilement des modules, forment des connecteurs électriques et fluidiques pour amener ou collecter le courant électrique entre le dispositif électrochimique et l'extérieur et pour amener, collecter et faire circuler les gaz entre le dispositif électrochimique et l'extérieur ;
dans lequel
au moins un élément de contact électrique (5.1; 5.2) est agencé entre deux modules adjacents avec contact entre leurs plaques de rigidification ;
et dans lequel
au moins un joint (6.1; 6.2) est agencé entre deux modules adjacents pour assurer l'étanchéité autour de chaque entrée/sortie de gaz d'un module à l'autre.

2. Dispositif électrochimique selon l'une des revendications précédentes, l'(les) élément(s) de contact électrique agencé(s) entre deux modules adjacents avec contact entre leurs plaques de rigidification comprenant au moins une couche d'un matériau en céramique conductrice.

3. Dispositif électrochimique selon la revendication 2, le matériau en céramique conductrice étant choisi dans le groupe constitué par :
- La_{0,6}Sr_{0,4}Co_{0,8}Fe_{0,2}O₃ (LSCF) ;
- La_{0,8}Sr_{0,2}Cu_{0,9}Fe_{0,1}O_{2,5} (LSCuF) ;
- La_{0,7}Sr_{0,3}CoO₃ (LSC) ;
- Sm_{0,5}Sr_{0,5}CoO₃ (SSC) ;
- SmBa_{0,5}Sr_{0,5}Co₂O₅ (SBSC) ;
- GdSrCo₂O₅ (GSC) ;
- La_{0,65}Sr_{0,3}MnO₃ (LSM) ;
- LaBaCo₂O₅ (LBC) ;
- YBaCo₂O₅ (YBC) ;
- Nd_{1,8}Ce_{0,2}CuO₄ (NCC) ;
- La_{0,8}Sr_{0,2}Co_{0,3}Mn_{0,1}Fe_{0,6}O₃ (LSCMF) ;
- La_{0,98}Ni_{0,6}Fe_{0,4}O₃ (LNF) ;
- La_{1,2}Sr_{0,8}NiO₄ (LSN) ;
- La_{0,7}Sr_{0,3}FeO₃ (LSF) ;
- La₂Ni_{0,6}Cu_{0,4}O₄ (LNC).

4. Dispositif électrochimique selon l'une des revendications 2 ou 3, la couche de matériau en céramique conductrice étant évidée sur au moins une partie de son épaisseur.

5. Dispositif électrochimique selon la revendication 1, l'(les) élément(s) de contact électrique agencé entre deux modules adjacents avec contact entre leurs plaques de rigidification comprenant au moins une grille en or ou au moins un cordon en or obtenu par dépôt d'une pâte.

6. Dispositif électrochimique selon l'une des revendications précédentes, le au moins un joint agencé entre deux modules adjacents étant constitué d'une feuille de mica percée en regard de chaque entrée/sortie de gaz d'un module à l'autre le cas échéant revêtue d'un cordon en verre ou en vitrocéramique autour de chaque entrée/sortie de gaz.

7. Dispositif électrochimique l'une des revendications 1 5, le au moins un joint agencé entre deux modules adjacents est constitué d'un cordon en verre ou en vitrocéramique autour de chaque entrée/sortie de gaz.

8. Dispositif électrochimique selon l'une des revendications précédentes, l'épaisseur de de chacune des plaques de rigidification étant comprise entre 1 et 10 mm.

9. Dispositif électrochimique selon l'une des revendications précédentes, comprenant deux plaques d'extrémité supplémentaires (13), dites plaques terminales, distinctes des plaques de rigidification entre lesquelles l'empilement de modules est agencé,
l'épaisseur de chacune des plaques terminales étant de préférence supérieure à 5 mm.

10. Dispositif électrochimique selon l'une des revendications précédentes, comprenant au moins une tige de connexion électrique (7,8) fixée sur chacune des deux plaques de rigidification ou le cas échéant à chacune des deux plaques terminales, agencées aux extrémités de l'empilement des modules,
chacune des tiges de connexion électrique étant de préférence vissée dans un taraudage sur le chant d'une des deux plaques de rigidification ou le cas échéant d'une des deux plaques terminales.

11. Dispositif électrochimique selon la revendication 10, comprenant quatre tiges de connexion fixées individuellement aux coins de chacune des deux plaques de rigidification ou le cas échéant à chacune des deux plaques terminales, agencées aux extrémités de l'empilement des modules.

12. Procédé de réalisation d'un dispositif électrochimique, formant un réacteur d'électrolyse ou de co-électrolyse SOEC ou une pile à combustible SOFC, destiné à fonctionner à haute température, comprenant les étapes suivantes :
a/ réalisation d'au moins deux modules, chaque module comprenant:
- un empilement de cellules électrochimiques à base d'oxydes solides de type SOEC/SOFC;
- une pluralité d'interconnecteurs électriques et fluidiques, comprenant chacun un composant en matériau conducteur électronique et étanche aux gaz pour amener ou collecter le courant électrique aux cellules et pour amener, collecter et faire circuler des gaz sur chaque électrode de chaque cellule électrochimique; les interconnecteurs étant agencés de part et d'autre de chacune des cellules électrochimiques ;
- deux plaques de rigidification entre lesquelles l'empilement est agencé;
b/ application d'un effort de serrage de chaque module par un système de boulons entre ses deux plaques de rigidification de sorte à obtenir un pré-assemblage de chaque module permettant de le transporter;
c/ empilement les uns sur les autres des modules préassemblés selon l'étape b/, avec intercalage entre deux modules adjacents avec contact entre leurs plaques de rigidification, d'au moins un élément de contact électrique et d'au moins un joint pour assurer l'étanchéité autour de chaque entrée/sortie de gaz d'un module à l'autre;
d/ application d'un effort de serrage de l'empilement de modules par un système de serrage, indépendant des systèmes de boulons des modules, entre les deux plaques de rigidification d'extrémité de sorte à obtenir un assemblage;
e/ retrait des systèmes de boulons de l'assemblage tout en maintenant le serrage indépendant;
f/ application d'un traitement thermomécanique à l'assemblage de sorte à finaliser au moins la mise en place des éléments de contact électrique et des joints d'étanchéité entre plaques de rigidification et ainsi l'assemblage final ;
le procédé comprenant une étape de réduction de toutes les cellules électrochimiques.

13. Procédé selon la revendication 12, l'étape a/ comprenant une étape a1/ d'application d'un traitement thermomécanique à chaque module réalisé de sorte à finaliser au moins la mise en place d'éléments de contact électrique et de joints d'étanchéité au sein de chaque module.

14. Procédé selon la revendication 13 ou 14, l'étape de réduction des cellules électrochimiques étant réalisée lors de l'étape a1/ pour chaque module ou lors de l'étape f/ pour l'assemblage de modules, de préférence,
lorsque l'étape de réduction des cellules électrochimiques est réalisée lors de l'étape a1/ pour chaque module, on réalise, à l'issue de cette dernière, une étape a2/ de mesure de tension électrique totale de chaque module.

15. Procédé selon l'une des revendications 12 à 14, comprenant une étape a3/ de test d'étanchéité de chaque module.
